(19) **Europäisches Patentamt**

**European Patent Office**

**Office européen des brevets**

(11) **EP 1 192 216 B1**

(12) **EUROPÄISCHE PATENTSCHRIFT**

(45) Veröffentlichungstag und Bekanntmachung des Hinweises auf die Patenterteilung:
**29.09.2004  Patentblatt 2004/40**

(51) Int Cl.$^7$: **C08L 23/04**, C08L 23/06,
F16L 9/12

(21) Anmeldenummer: **00945778.9**

(22) Anmeldetag: **20.06.2000**

(86) Internationale Anmeldenummer:
**PCT/EP2000/005651**

(87) Internationale Veröffentlichungsnummer:
**WO 2001/002480 (11.01.2001 Gazette 2001/02)**

(54) **POLYETHYLEN FORMMASSEN UND DARAUS HERGESTELLTES ROHR MIT MECHANISCHEN EIGENSCHAFTEN**

POLYETHYLENE MOLDING MATERIAL AND PIPE PRODUCED THEREWITH HAVING MECHANICAL PROPERTIES

MATIERE A MOULER POLYETHYLENE ET TUYAU REALISE DANS LADITE MATIERE PRESENTANT DES CARACTERISTIQUES MECANIQUES

(84) Benannte Vertragsstaaten:
**AT BE CH CY DE DK ES FI FR GB GR IE IT LI LU MC NL PT SE**

(30) Priorität: **30.06.1999  DE 19929812**

(43) Veröffentlichungstag der Anmeldung:
**03.04.2002  Patentblatt 2002/14**

(73) Patentinhaber: **Basell Polyolefine GmbH**
**50389 Wesseling (DE)**

(72) Erfinder:
• **BÖHM, Ludwig**
 **D-65795 Hattersheim (DE)**
• **BERTHOLD, Joachim**
 **D-65779 Kelkheim (DE)**
• **ENDERLE, Johannes-Friedrich**
 **D-60318 Frankfurt (DE)**
• **DAMM, Elke**
 **D-60431 Frankfurt (DE)**
• **SCHULTE, Ulrich**
 **D-65779 Kelkheim (DE)**

(56) Entgegenhaltungen:
EP-A- 0 100 843          EP-A- 0 707 040
EP-A- 0 739 937          EP-A- 0 848 036
WO-A-00/01765          WO-A-97/03124

EP 1 192 216 B1

**Beschreibung**

Die vorliegende Erfindung betrifft eine Polyethylen Formmasse mit bimodaler Molmassenverteilung und ein hochfestes Rohr aus dieser Formmasse.

Polyethylen wird in großem Umfang zur Herstellung von Rohren, beispielsweise für Gas- und Wassertransportsysteme, verwendet, weil für solche Rohre ein Werkstoff mit besonders hoher mechanischer Festigkeit, hoher Korrosionsfestigkeit und absolut zuverlässiger Langzeitbeständigkeit benötigt wird. Zahlreiche Publikationen beschreiben Werkstoffe mit den verschiedensten Eigenschaften und Verfahren zu deren Herstellung.

Die EP-A-603,935 beschreibt bereits eine Formmasse auf Basis von Polyethylen, die eine bimodale Molmassenverteilung besitzt und die sich unter anderem auch zur Herstellung von Rohren eignen soll. Rohre, die aus den Formmassen nach dieser Literaturstelle hergestellt sind, lassen jedoch noch in bezug auf ihre Innendruckdauerbelastbarkeit, ihre Spannungsrissbeständigkeit, ihre Tieftemperaturkerbschlagzähigkeit und ihren Widerstand gegen schnelles Rißwachstum zu wünschen übrig.

Um Rohre mit ausgewogenen mechanischen Eigenschaften und damit einer optimalen Eigenschaftskombination zu erreichen, ist es notwendig, einen Rohstoff einzusetzen, der eine noch breitere Molmassenverteilung aufweist. Ein solcher Rohstoff ist in der US-PS 5,338,589 beschrieben und wird mit einem hochaktiven Katalysator hergestellt, der aus der WO 91/18934 bekannt ist und bei dem das Magnesiumalkoholat als gelförmige Suspension eingesetzt wird. Überraschend wurde gefunden, dass der Einsatz dieses Werkstoffes in Formteilen, insbesondere in Rohren, eine gleichzeitige Verbesserung der in teilkristallinen Thermoplasten üblicherweise gegenläufigen Eigenschaften Steifigkeit und Kriechneigung einerseits und Spannungsrißbeständigkeit und Zähigkeit andererseits ermöglicht.

Aus der EP-A-0 739 937 ist bereits ein Rohr bekannt, das mechanische Eigenschaften besitzt, die den allerhöchsten Anforderungen der Verbraucherverbände genügen und die zur Klassifizierung dieses Rohres in die Güteklasse "PE 100" gemäß ISO/DIS 9080 geführt haben.

Aufgabe der vorliegenden Erfindung war die Entwicklung einer Polyethylen Formmasse, mit der sich gegenüber dem bekannten Rohrwerkstoff der Festigkeitsklasse PE 100 gemäß ISO/DIS 9080 eine noch bessere Festigkeit der damit hergestellten Rohre realisieren lässt.

Gelöst wird diese Aufgabe durch eine Formmasse gemäß Anspruch 1. Die Erfindung betrifft ferner auch ein Rohr aus dieser Formmasse mit ganz herausragenden mechanischen Eigenschaften und seine Verwendung für den Bau von Gas- und Wasserleitungen.

Die erfindungsgemäße Polyethylen Formmasse besitzt eine Dichte bei einer Temperatur von 23 °C im Bereich von ≥ 0,948 als Naturware, d.h. ohne Farbstoffzusätze, und von ≥ 0,959 g/cm$^3$ als schwarz eingefärbte Ware mit einem Rußgehalt im Bereich von 2 bis 5 Gew.-%, bezogen auf das Gesamtgewicht der schwarz eingefärbten Ware, und sie besitzt eine breite bimodale Molmassenverteilung bei der das Verhältnis des Gewichts des niedermolekularen Anteils zum Gewicht des höhermolekularen Anteils im Bereich von 0,5 bis 2,0 liegt, vorzugsweise von 0,8 bis 1,8. Das Polyethylen kann geringe Anteile von bis zu 5 Gew.-% an weiteren Monomereinheiten mit 4 bis 10 C-Atomen enthalten. Beispiele für solche Comonomere sind 1-Buten, 1-Penten, 1-Hexen oder 4-Methylpenten-1.

Die Bimodalität kann als Maß für die Lage der Schwerpunkte der beiden Einzelmolmassenverteilungen mit Hilfe der Viskositätszahlen (VZ) nach ISO/R 1191 der in zwei hintereinander geschalteten Polymerisationsstufen gebildeten Polymeren beschrieben werden. Dabei beträgt die $VZ_1$ des in der ersten Polymerisationsstufe gebildeten niedermolekularen Polyethylens 40 bis 90 cm$^3$/g, während $VZ_{gesamt}$ des Endprodukts im Bereich von 300 bis 450 cm$^3$/g liegt. $VZ_2$ des in der zweiten Polymerisationsstufe gebildeten höhermolekularen Polyethylens läßt sich nach der folgenden mathematischen Formel berechnen:

$$VZ_2 = \frac{VZ_{gesamt} - w_1 \cdot VZ_1}{1 - w_t}$$

wobei $w_1$ für den Gewichtsanteil des in der ersten Stufe gebildeten niedermolekularen Polyethylens steht, gemessen in Gew.-%, bezogen auf das Gesamtgewicht des in beiden Stufen gebildeten Polyethylens mit bimodaler Molmassenverteilung. Der für $VZ_2$ errechnete Wert liegt normalerweise im Bereich von 500 bis 2000 cm$^3$/g.

Die erfindungsgemäße Formmasse besitzt Langzeiteigenschaften, die noch über die Anforderung der Güteklasse PE 100 gemäß ISO/DIS 9080 von 10,0 MPa nach 50 a als LCL (Lower critical confidence Limit), ermittelt nach der Extrapolationsmethode, hinausgehen. Überraschenderweise erreicht die erfindungsgemäße Polyethylen Formmasse bei der notwendigen höheren Steifigkeit und bei höherer Streckspannung einen außerordentlich hohen Widerstand gegen langsames Risswachstum. Diese hohe Spannungsrissbeständigkeit zeigt sich darin, dass Sprödbrüche bei der Zeitstandsinnendruckprüfung LTHS (Long Term Hydrostatic Strength) an Rohren aus der erfindungsgemäßen Formmasse innerhalb eines Zeitintervalls von 33.000 h bei einer Temperatur von 80 °C nicht beobachtet werden konnten.

Bei der LTHS Prüfung wird die Standzeit der Rohre ohne Sprödbruch auf 50 Jahre durch Extrapolation bestimmt. Auf Grund der außerordentlich hohen Spannungsrissbeständigkeit, die durch die Erfindungsgemäße Formmasse erreicht wird, verläuft die duktile Linie im Zeitstandsdiagramm, mit Hilfe derer auf 50 Jahre Standzeit extrapoliert wird, sehr flach. So dass sich nach dieser Prüfmethode für Rohre aus der erfindungsgemäßen Formmasse bei einer Prüftemperatur von 23 °C und einer Standzeit von 50 Jahren ein Innendruck von 12,5 MPa ergibt, was demnach zu einer neuen Güteklasse, der PE 125, führt.

Die Extrapolationskurve bei 23 °C lässt sich mathematisch durch folgende Gleichung beschreiben:

$$\sigma = K \cdot t_{failure}^{-\eta}$$

Für die Standardwerte K = 15,6 und η = -0,017 ergeben sich durch Extrapolation für Rohre aus der erfindungsgemäßen Formmasse folgende Werte:

| $t_{failure}$ | 10 h | 10 000 h | 50 Jahre |
|---|---|---|---|
| $\sigma$ | 15,0 | 13,3 | 12,5 |

Das Polyethylen wird durch Polymerisation der Monomeren in Suspension, in Lösung oder in der Gasphase bei Temperaturen im Bereich von 20 bis 120°C, einem Druck im Bereich von 2 bis 60 bar und in Gegenwart eines Ziegler-Katalysators erhalten, der aus einer Übergangsmetallverbindung und einer aluminiumorganischen Verbindung zusammengesetzt ist. Die Polymerisation wird in zwei hintereinander geschalteten Stufen geführt, wobei die Molmasse des Polyethylens in jeder Stufe jeweils mit Hilfe von Wasserstoff geregelt wird.

Die erfindungsgemäße Polyethylen Formmasse kann neben dem Polyethylen noch weitere Zusatzstoffe enthalten. Solche Zusatzstoffe sind beispielsweise Wärmestabilisatoren, Antioxidantien, UV-Absorber, Lichtschutzmittel, Metalldesaktivatoren, Peroxid zerstörende Verbindungen, basische Costabilisatoren in Mengen von 0 bis 10 Gew.-%, vorzugsweise 0 bis 5 Gew.-%, aber auch Füllstoffe, Verstärkungsmittel, Weichmacher, Gleitmittel. Emulgatoren, Pigmente, optische Aufheller, Flammschutzmittel, Antistatika, Treibmittel oder Kombinationen von diesen in Gesamtmengen von 0 bis 50 Gew.-%.

Das erfindungsgemäße Rohr wird hergestellt, indem die Polyethylen Formmasse zunächst in einem Extruder bei Temperaturen im Bereich von 200 bis 250°C plastifiziert und dann durch eine ringförmige Düse ausgepreßt und abgekühlt wird. Rohre der erfindungsgemäßen Art eignen sich generell für alle Druckklassen gemäß DIN 8074.

Für die Verarbeitung zu Rohren können sowohl konventionelle Einschneckenextruder mit glatter Einzugszone als auch Hochleistungsextruder mit feingenutetem Zylinder und förderwirksamem Einzug eingesetzt werden. Die Schnecken werden typischerweise als Dekompressionsschnecken ausgelegt mit einer Länge von 25 bis 30 D (D = ∅). Die Dekompressionsschnecken besitzen eine Austragszone, in der Temperaturunterschiede in der Schmelze ausgeglichen werden und in der die durch Scherung entstandenen Relaxationsspannungen abgebaut werden sollen.

Die vom Extruder kommende Schmelze wird über konisch angeordnete Bohrungen zunächst auf einen Ringquerschnitt verteilt und dann über einen Wendelverteiler oder einen Siebkorb der Dorn/Mundstückskombination zugeführt. Zusätzlich können bei Bedarf noch Stauringe oder andere Konstruktionselemente zur Vergleichmäßigung des Schmelzestromes vor dem Düsenaustritt eingebaut sein.

Die Kalibrierung und Kühlung erfolgt bis hin zu großen Rohrdurchmessern zweckmäßigerweise durch Vakuumkalibrierung. Die eigentliche Formgebung erfolgt mit geschlitzten Kalibrierhülsen, die zur besseren Wärmeabführung aus Buntmetall gefertigt sind. Dabei sorgt ein im Einlauf zugeführter Wasserfilm für ein rasches Abkühlen der Oberfläche des Rohres unter den Kristallitschmelzpunkt und dient zusätzlich als Schmierfilm zum Verringern der Reibungskräfte. Die Gesamtlänge L der Kühlstrecke wird unter der Annahme bemessen, dass eine Schmelze mit einer Temperatur von 220 °C mit Hilfe von Wasser mit einer Temperatur von 15 bis 20 °C soweit abgekühlt werden soll, dass die Temperatur der Rohrinnenoberfläche maximal 85 °C beträgt.

Die Spannungsrissbeständigkeit ist ein Merkmal, das bereits aus der EP-A 436 520 bekannt ist. Der Prozess des langsamen Risswachstums kann durch molekulare Strukturparameter wie Molmassen- und Comonomerverteilung wesentlich beeinflusst werden. Die Anzahl der sogenannten Verbundmoleküle ist zunächst durch die Kettenlänge des Polymers bestimmt. Die Morphologie von teilkristallinen Polymeren wird zusätzlich durch Comonomereinbau eingestellt, weil die Dicke von Kristallit-Lamellen durch das Einbringen von Kurzkettenverzweigungen beeinflußt werden kann. Das bedeutet, dass die Anzahl von Verbundmolekülen, sogenannten "Tie-Molekülen", in Copolymeren höher ist als in Homopolymeren mit vergleichbarer Kettenlänge.

➤ Die Spannungsrissbeständigkeit des erfindungsgemäßen Rohres wird nach einer internen Messmethode ermittelt. Diese Labormethode ist von M. Fleißner in Kunststoffe 77 (1987), S. 45 ff, beschrieben. Diese Publikation zeigt, dass zwischen der Bestimmung des langsamen Risswachstums im Zeitstandversuch an rundum gekerbten Probestäben und dem spröden Ast der Zeitstandsinnendruckprüfung nach ISO 1167 ein Zusammenhang besteht. Eine Verkürzung der Zeit bis zum Versagen wird durch die Verkürzung der Rissinitiierungszeit durch die Kerbe (1,6 mm/ Rasierklinge) in Ethylenglykol als spannungsrissförderndem Medium bei einer Temperatur von 80 °C und einer Zugspannung von 5 MPa erreicht. Die Probenherstellung erfolgt, indem drei Probekörper mit den Abmessungen 10 x 10 x 90 mm aus einer 10 mm dicken Pressplatte heraus gesägt werden. Die Probekörper werden rundum mit einer Rasierklinge in einer eigens dafür angefertigten Kerbvorrichtung (siehe Abbildung 5 in der oben genannten Publikation) in der Mitte gekerbt. Die Kerbtiefe beträgt 1,6 mm.

⟩ Die Bruchzähigkeit des erfindungsgemäßen Rohres wird ebenfalls nach einer internen Messmethode an Probestäben mit den Abmessungen 10 x 10 x 80 mm, die aus einer 10 mm dicken Pressplatte heraus gesägt wurden, bestimmt. In der bereits erwähnten Kerbvorrichtung werden sechs dieser Probestäbe mit der Rasierklinge in der Mitte gekerbt. Die Kerbtiefe beträgt 1,6 mm. Die Durchführung der Messung entspricht weitgehend der Charpy-Meßprozedur nach ISO 179 bei veränderten Probekörpern und veränderter Schlaggeometrie (Widerlagerabstand). Alle Probekörper werden über eine Zeitdauer von 2 bis 3 h auf die Meßtemperatur von 0 °C temperiert. Man legt dann einen Probekörper zügig auf das Widerlager eines Pendelschlagwerks gemäß ISO 179. Der Widerlagerabstand beträgt 60 mm. Der Fall des 2 J Hammers wird ausgelöst, wobei der Fallwinkel auf 160 °, die Pendellänge auf 225 mm und die Auftreffgeschwindigkeit aus 2,93 m/sec eingestellt wird. Zur Auswertung der Messung wird der Quotient aus verbrauchter Schlagenergie und Anfangsquerschnittfläche an der Kerbe $a_{FM}$ in mJ/mm$^2$ berechnet. Dabei können nur Werte bei vollständigem Bruch und Scharnierbruch als Grundlage für einen gemeinsamen Mittelwert dienen (siehe ISO 179).

⟩ Die Kerbschlagzähigkeit$_{ISO}$ wird nach der ISO 179 gemessen. Die Dimension der Probe beträgt 10 x 4 x 80 mm, wobei eine V-Kerbe mit einem Winkel von 45°, einer Tiefe von 2 mm und einem Kerbgrundradius von 0,25 mm eingenutet wird.

⟩ Der Biegekriechmodul wird nach DIN 54852-Z4 als Einminutenwert gemessen.

⟩ Der S4-Test (Small Scale Steady State - Test) dient dazu, den Widerstand des Rohres gegen schnelle Rissfortpflanzung zu bestimmen und wird an Rohren der Abmessung PN 10 mit einem Durchmesser von 110 mm durchgeführt. Das genaue Verfahren ist in ISO/DIS 13477 beschrieben. Durch diese Methode wird der kritische Druck $p_c$ in bar ermittelt, oberhalb dessen das unter diesem Druck $p_c$ stehende Rohr längs über die gesamte Länge aufreißt.

Die nachfolgenden Ausführungsbeispiele sollen die Erfindung für den Fachmann noch deutlicher darstellen.

Beispiel 1 (erfindungsgemäß):

Eine Polyethylen Formmasse wurde mit einem Ziegler Katalysator und nach der Vorschrift der WO 91/18934 unter Einhaltung der nachfolgend in Tabelle 1 angegebenen Betriebsbedingungen hergestellt:

Tabelle 1

|  | Reaktor I<br>Inhalt: 120 1 | Reaktor II<br>Inhalt: 120 1 |
|---|---|---|
| Temperatur | 83 °C | 83 °C |
| Katalysatorzufuhr | 0,8 mmol/h | ----- |
| Cokatalysatorzufuhr | 15 mmol/h | 30 mmol/h |
| Dispergiermittel (Dieselöl) | 25 1/h | 50 1/h |
| Ethylen | 9,5 kg/h | 10 kg/h |
| 1-Hexen | 0 ml/h | 913 ml/h |
| Wasserstoff im Gasraum | 80 Vol.-% | 0,7 Vol.-% |
| Gesamtdruck | 8,9 bar | 2,0 bar |

Die so hergestellte Polyethylen Formmasse hatte einen Schmelzflussindex MFI$_{5/19°C}$ von 0,18 dg/min, gemessen nach ISO 11 33, und eine Dichte d von 0,950 g/cm$^3$. Das Polyethylen wurde zur noch besseren Charakterisierung einer präparativen TREF-Analyse (Temperature Rising Elution Fractionation) unterzogen. Diese Analysemethode ist ein sehr nützliches Werkzeug zur Bestimmung der Comonomerverteilung im teilkristallinen Polyethylen und wurde publiziert von L. Wild und T. Ryle unter dem Titel: "Crystallyzation distribution in Polymers: A new analytical technique" in Poly. Prep. Am Chem. Soc., - Polym. Chem Div., 18, 182 (1977). Nach dieser Analysemethode wird das zu untersuchende Polymer in p-Xylol aufgelöst, auf einem anorganischen Trägermaterial abgeschieden und von dort nach und nach bei immer weiter ansteigenden Temperaturen mit p-Xylol fraktioniert, wobei sich bei niederen Temperaturen die weniger kristallinen Anteile und bei höheren Temperaturen die stärker kristallinen Anteile lösen. Auf diese Weise ist es möglich, ein teilkristallines Polymer in unterschiedliche Mengenanteile, abhängig von der Dicke der Kristallit-Lamellen aufzutrennen. Die verschiedenen Fraktionen können dann ihrerseits wieder nach der GPC-Methode (Gel Permeations Chromatographie) auf ihre Molmassenverteilung hin untersucht werden.

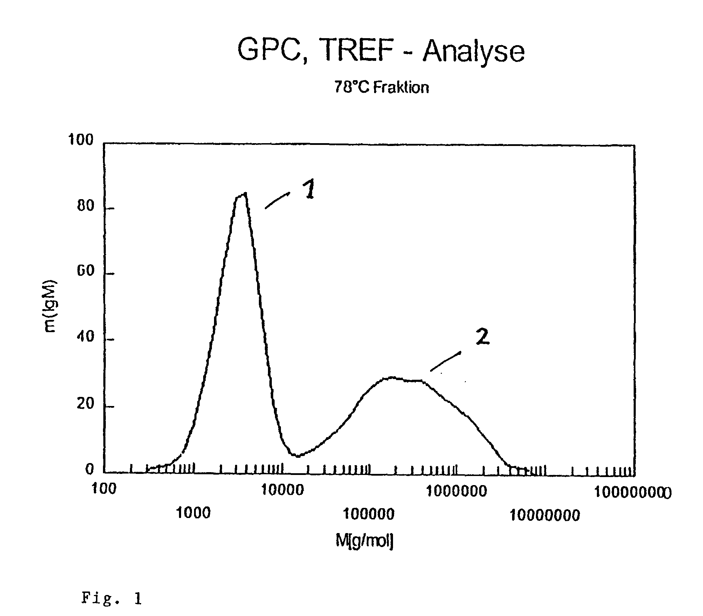

Das als Figur 1 beigefügte Diagramm zeigt das Ergebnis einer kombinierten TREF-GPC-Analyse mit der erfindungsgemäßen Polyethylen Formmasse.

Das nach Beispiel 1 wie vorstehend beschrieben hergestellte Polyethylen wurde in p-Xylol (Siedepunkt: 138 °C) wie oben angegeben zunächst aufgelöst und dann auf einem Chromosorb P Trägermaterial durch Abkühlen abgeschieden. Danach wurden durch Eluierung Fraktionen bei Temperaturen von 60, 70, 78, 83, 86, 89, 93, 100 und 110 °C gebildet. Dann wurde mit der Fraktion bei 78 °C ± 3 K und dem darin gelösten Polymeranteil eine GPC-Analyse durchgeführt. Peak 1 zeigt die bei 78 °C lösliche, niedermolekulare, hochkristalline PE-Fraktion mit geringer Dicke der Kristallit-Lamellen, während Peak 2 durch einen Anteil mit größerer Molmasse, gleichzeitig aber hohem Anteil an Comonomereinbau und damit auch wieder geringerer Kristallinität, hervorgerufen wird. Dieser unter Peak 2 fallende Produktanteil ist für die hohe Anzahl an sogenannten "tie-Molekülen" zwischen den Kristallit-Lamellen und damit für die außerordentlich hohe Spannungsrissbeständigkeit des aus der erfindungsgemäßen Formmasse hergestellten Rohres verantwortlich.

Das nach Beispiel 1 wie vorstehend beschrieben hergestellte Polyethylen wurde in einem Extruder mit einem Durchmesser von 48 mm und einer Länge entsprechend dem 24,4-fachen des Durchmessers (117,12 cm) bei einer Temperatur von 227 °C plastifiziert und anschließend durch eine ringförmige Düse mit einem Außendurchmesser von 32,1 mm und einem Dorn mit einem Durchmesser von 26,5 mm zu einem Rohr mit einem Durchmesser von 32,1 mm und einer Wanddicke von 3,08 mm unter Zuhilfenahme einer Vakuumkalibrierung extrudiert. Die Abkühlung erfolgte in einem Kühlbad mit einer Länge von 3 m, das auf einer Temperatur von 15°C gehalten wurde. Die an dem fertigen Rohr gemessenen Eigenschaften sind in der nachfolgenden Tabelle 2 angegeben.

Vergleichsbeispiel:

Es wurde ein Rohr aus Polyethylen hergestellt im Einklang mit den Angaben aus Beispiel 1 der EP-A-739 937. Die an dem Rohr gemessenen Eigenschaften sind ebenfalls in der nachfolgenden Tabelle 2 zusammengestellt.

Die Abkürzungen der physikalischen Eigenschaften in der Tabelle 2 haben die folgende Bedeutung:

- BKM = Biegekriechmodul, gemessen nach ISO 54852-Z4 in $N/mm^2$ als Einminutenwert,

- BZ = Bruchzähigkeit gemessen nach der vorher beschriebenen internen Messmethode bei 0 °C in $mJ/mm^2$,

- $KSZ_{ISO}$ = Kerbschlagzähigkeit, gemessen nach ISO 179/DIN 53453 in $mJ/mm^2$ bei -20 °C und bei +23 °C,

- SRB = Spannungsrissbeständigkeit gemessen nach der internen Messmethode nach M. Fleißner in h,

- VBK = Verarbeitbarkeit, gemessen als Extruderdurchsatz bei einem Extruder mit einem Durchmesser D von 48 mm und einer Länge L von 24,4·D bei einer konstanten Schneckengeschwindigkeit von 80 Umdrehungen pro min in kg/h,

- $p_c$ = Widerstand gegen schnelles Risswachstum, gemessen nach dem S4-Test in bar an Rohren der Druckklasse PN 10 mit einem Durchmesser von 110 mm.

Tabelle 2

|  | Beispiel 1 | Vergleich |
|---|---|---|
| BKM | 1400 | 1304 |
| BZ | 10,0 | 8,8 |
| $KSZ_{ISO}$ (+23/-20°C) | 40/26 | 39,2/24,1 |
| SRB | » 1500 | »1500 |
| VBK | 28 | 28,2 |
| $p_c$ | > 25 | > 25 |
| LTHS extrapol. 23 °C LCL 50 a | 12,5 | 11,1 |

Die Messwerte zeigen deutlich, dass das erfindungsgemäße Rohr durchweg bessere Festigkeitseigenschaften besaß und auch bei der Herstellung besser verarbeitet werden konnte.

**Patentansprüche**

1. Polyethylen Formmasse mit bimodaler Molmassenverteilung, die in zwei hintereinander geschalteten Polymerisationsstufen gebildet. wird und eine Gesamtdichte von $\geq 0,948$ g/cm$^3$ besitzt und einen MFI$_{190/5}$ von $\leq 0,2$ dg/min, **dadurch gekennzeichnet, dass** sie eine Menge von 35 bis 65 Gew.-% an niedermolekularem Ethylen Homopolymer A enthält, das eine Viskositätszahl VZ$_A$ im Bereich von 40 bis 90 cm$^3$/g, einen Schmelzflussindex MFI$_{190/2,16\,A}$ im Bereich von 40 bis 2000.dg/min und eine Dichte d$_A$ von $\geq 0,965$ g/cm$^3$ besitzt, und eine Menge von 35 bis 65 Gew.-% an hochmolekularem Ethylen Copolymer B, das eine Viskositätszahl VZ$_B$ im Bereich von 500 bis 2000 cm$^3$/g, einen Schmelzflussindex MFI$_{190/5\,B}$ im Bereich von 0,02 bis 0,2 dg/min und eine Dichte d$_B$ im Bereich von 0,922 bis 0,944 g/cm$^3$ besitzt, und dass die bei einer präparativen TREF-Analyse aus der Polyethylen Formmasse
bei einer Temperatur von 78 °C $\pm$ 3 K mit p-Xylol gewonnene Fraktion eine mittlere Molmasse von $\geq$ 200 000 g/Mol besitzt.

2. Rohr aus einer Polyethylenformmasse nach Anspruch 1, **dadurch gekennzeichnet, dass** es eine Spannungsrissbeständigkeit von $\geq$ 1500 h und eine Bruchzähigkeit BZ von $\geq$ 9 mJ/mm$^2$ besitzt.

3. Rohr nach Anspruch 2, **dadurch gekennzeichnet, dass** es einen Biegekriechmodul, gemessen nach DIN 54852-Z4, von $\geq$ 1350 N/mm$^2$ besitzt.

4. Rohr nach Anspruch 2 oder 3, **dadurch gekennzeichnet, dass** es aus einem Ethylenpolymeren mit bimodaler Molmassenverteilung gefertigt ist, das Comonomere mit 4 bis 10 Kohlenstoffatomen in einer Menge von 2,5 bis 4 Gew.-% im höhermolekularen Anteil B enthält.

5. Rohr nach Anspruch 3 oder 4, **dadurch gekennzeichnet, dass** der niedermolekulare Anteil des Ethylenpolymers einen Schmelzflussindex MFI$_{2,16/190°C}$ im Bereich von 200 bis 800 g/10 min, vorzugsweise von 250 bis 450 g/10 min, besitzt.

6. Rohr nach einem der Ansprüche 3 bis 5, **dadurch gekennzeichnet, dass** das Ethylenpolymer einen Schmelzflussindex MFI$_{5/190°C}$ von $\leq$ 0,19 dg/min besitzt.

7. Rohr nach einem der Ansprüche 2 bis 6, dadurch gekennzeichent, dass es eine Kerbschlagzähigkeit KSZ$_{ISO}$, gemessen nach ISO 179 (DIN 53453) bei -20 °C von wenigstens 25 mJ/mm$^2$ und bei +23 °C von wenigstens 40 mJ/mm$^2$ besitzt.

8. Rohr nach einem der Ansprüche 2 bis 7, **dadurch gekennzeichnet, dass** es einen Widerstand gegen schnelles Risswachstum, gemessen nach ISO/DIS 13477 an einem Rohr der Druckklasse PN 10 mit einem Durchmesser von 110 mm (S4-Test), von $\geq$ 20 bar besitzt.

9. Verwendung eines Rohres nach einem der Ansprüche 2 bis 8 zum Transport von Gasen, insbesondere zum Transport von Erdgas.

10. Verwendung eines Rohres nach einem der Ansprüche 2 bis 8 zum Transport von Wasser.

**Claims**

1. A polyethylene molding composition with bimodal molar mass distribution which is formed in two sequential polymerization stages and has an overall density of $\geq$ 0.948 g/cm$^3$ and an MFI$_{190/5}$ of $\leq$ 0.2 dg/min, wherein the molding composition comprises from 35 to 65 % by weight of low-molecular-weight ethylene homopolymer A which has a viscosity number VN$_A$ of from 40 to 90 cm$^3$/g, a melt flow index MFI$_{190/2.16\,A}$ of from 40 to 2000 dg/min and a density d$_A$ of $\geq$ 0.965 g/cm$^3$, and from 35 to 65 % by weight of high-molecular-weight ethylene copolymer B which has a viscosity number VN$_B$ of from 500 to 2000 cm3/g, a melt flow index MFI$_{190/5\,B}$ of from 0.02 to 0.2 dg/min and a density d$_B$ of from 0.922 to 0.944 g/cm3, and wherein a fraction obtained from the polyethylene molding composition in a preparative TREF analysis at 78°C ± 3 K using p-xylene has an average molar mass of ≥ 200 000 g/Mol.

2. A pipe made from a polyethylene molding composition as claimed in claim 1, wherein the pipe has an envirortmental stress cracking resistance of ≥ 1500 h and a fracture toughness FT of ≥ 9 mJ/mm$^2$.

3. A pipe as claimed in claim 2, wherein the pipe has a flexural creep modulus of ≥ 1350 N/mm$^2$, measured to DIN 54852-Z4.

4. A pipe as claimed in claim 2 or 3 , wherein the pipe has been manufactured from an ethylene polymer with bimodal molar mass distribution, the higher-molecular-weight portion B of which comprises from 2.5 to 4 % by weight of comonomers having from 4 to 10 carbon atoms.

5. A pipe as claimed in claim 3 or 4 , wherein the low-molecular-weight portion of the ethylene polyiner has a melt flow index $MFI_{2.16/190°C}$ of from 200 to 800 g /10 min, preferably from 250 to 450 g /10 min.

6. A pipe as claimed in any one of claims 3 to 5, wherein the ethylene polymer has a melt flow index $MFI_{5/190°C}$ of ≤ 0.19 dg/min.

7. A pipe as claimed in any one of claims 2 to 6, wherein the pipe has a notched impact strength $NIS_{ISO}$, of at least 25 mJ/mm2 to ISO 179 (DIN 53453) at -20°C and at least 40 mJ/mm2 at +23°C.

8. A pipe as claimed in any one of claims 2 to 7, wherein the pipe has a resistance to rapid crack growth of ≥ 20 bar, measured to ISO/DIS 13477 on a pipe of pressure class PN 10 with a diameter of 100 rmn (S4 test).

9. The use of a pipe as claimed in any one of claims 2 to 8 for transporting gases, in particular for transporting natural gas.

10. The use of a pipe as claimed in any one of claims 2 to 8 for transporting water.


**Revendications**

1. Matière moulable de polyéthylène, présentant une distribution bimodale des masses moléculaires, que l'on obtient en réalisant deux étapes de polymérisation successives, et qui possède une masse volumique totale supérieure ou égale à 0,948 g/cm$^3$ et un indice de fluidité moyen $MFI_{190/5}$ inférieur ou égal à 0,2 dg/min, **caractérisée en ce qu'**elle contient une quantité de 35% à 65% en poids d'éthylène à faible masse moléculaire en tant qu'homopolymère A, qui présente un indice de viscosité intrinsèque $VZ_A$ de 40 cm$^3$/g à 90 cm$^3$/g, un indice de fluidité $MFI_{190/2,16}$ A de 40 dg/min à 2 000 dg/min et une masse volumique $d_A$ supérieure ou égale à 0,964 g/cm$^3$, et une quantité de 35% à 65% en poids d'éthylène à masse moléculaire élevée en tant que copolymère B, qui présente un indice de viscosité intrinsèque $VZ_B$ de 500 cm$^3$/g à 2 000 cm$^3$/g, un indice de fluidité $MFI_{190/5\ B}$ de 0,0.2 dg/min à 0,2 dg/min et une masse volumique $d_B$ de 0,922 g/cm$^3$ à 0,944 g/cm$^3$, et **en ce que** la fraction obtenue lors d'une analyse TREF (fractionnement par température croissante d'élution) préparatoire à partir de la matière moulable de polyéthylène à une température de 78°C ± 3 K avec du p-xylène possède une masse moléculaire moyenne supérieure ou égale à 200 000 g/mol.

2. Tube fabriqué à partir d'une matière moulable de polyéthylène selon la revendication 1, **caractérisé en ce qu'**il possède une résistance à la fissure due à une contrainte supérieure ou égale à 1 500 h et une résistance à la rupture BZ supérieure ou égale à 9 mJ/mm$^2$.

3. Tube selon la revendication 2, **caractérisé en ce qu'**il possède un module de fluage, mesuré selon DIN 54852-Z4, supérieur ou égal à 1 350 N/mm$^2$.

4. Tube selon la revendication 2 ou 3, **caractérisé en ce qu'**il est fabriqué à partir d'un polymère d'éthylène présentant une distribution bimodale des masses moléculaires qui contient, dans la proportion B à masse moléculaire élevée, des comonomères possédant 4 à 10 atomes de carbone à raison de 2,5% à 4% en poids.

5. Tube selon la revendication 3 ou 4, **caractérisé en ce que** la proportion du polymère d'éthylène à faible masse moléculaire possède un indice de fluidité $MFI_{2,16/190°C}$ de 200 g/10 min à 800 g/10 min, de préférence de 250 g/10 min à 450 g/10 min.

6. Tube selon l'une quelconque des revendications 3 à 5, **caractérisé en ce que** le polymère d'éthylène possède un indice de fluidité $MFI_{5/190°C}$ inférieur ou égal à 0,19 dg/min.

7. Tube selon l'une quelconque des revendications 2 à 6, **caractérisé en ce que** qu'il présente une résistance au choc Charpy $KSZ_{ISO}$, mesurée selon ISO 179 (DIN 53453), à -20°C d'au moins 25 mJ/mm$^2$ et à +23°C d'au moins 40 mJ/mm$^2$.

8. Tube selon l'une quelconque des revendications 2 à 7, **caractérisé en ce que** qu'il possède une résistance à la propagation rapide de la fissure, mesurée selon ISO/DIS 13477 sur un tube de classe de pression PN 10 d'un diamètre de 110 mm (essai S4), supérieure ou égale à 20 bars.

9. Utilisation d'un tube selon l'une quelconque des revendications 2 à 8 pour le transport de gaz, en particulier pour le transport de gaz naturel.

10. Utilisation d'un tube selon l'une quelconque des revendications 2 à 8 pour le transport d'eau.

EP 1 192 216 B1

Fig. 1